# EUROPEAN PATENT SPECIFICATION

(11) **EP 2 479 603 B1**
(45) Date of publication and mention of the grant of the patent: **04.04.2018**
(21) Application number: 10817369.1
(22) Date of filing: 01.09.2010
(51) Int. Cl.: G02F 1/1333, G02F 1/13

(54) **METHOD FOR MANUFACTURING A CURVED DISPLAY PANEL**
VERFAHREN ZUR HERSTELLUNG EINER GEKRÜMMTEN ANZEIGETAFEL
PROCÉDÉ DE FABRICATION D'UN PANNEAU D'AFFICHAGE INCURVÉ

(30) Priority: 18.09.2009 KR 20090088292
(43) Date of publication of application: 25.07.2012
(73) Proprietor: Tovis Co., Ltd., Yeonsu-gu, Incheon 406-840 (KR)
(72) Inventor: KIM, Yong Beom, Incheon 406-736 (KR); PARK, Woon Yong, Suwon-si Gyeonggi-do 443-470 (KR)
(74) Representative: dompatent von Kreisler Selting Werner - Partnerschaft von Patent- und Rechtsanwälten mbB
(86) International application number: PCT/KR2010/005913
(87) International publication number: WO 2011/034300

(56) References cited:
- EP-A2- 2 535 765
- CN-A- 101 398 989
- JP-A- 2003 280 548
- JP-A- 2004 219 551
- JP-A- 2008 089 884
- JP-A- 2009 020 168
- JP-A- 2009 115 933
- KR-A- 20080 048 272
- US-A1- 2005 117 197

## Description

### [Technical Field]

The present invention relates to a display panel manufacturing method for manufacturing a display panel in a curved shape.

### [Background Art]

As display technology makes advances, various kinds of display devices are being developed and used. From among these display devices, there is a liquid crystal display device to display an image using liquid crystals.

US2005117197 discloses a method of manufacturing an electro-optical device having a curved display surface. A liquid crystal panel comprising a TFT array substrate and a counter substrate, each composed of a glass substrate or a quartz substrate, is thinned down to, for example, a thickness of 25 µm by a polishing process or an etching process. Subsequently, a first polarizing plate, first spacers, the liquid crystal panel, second spacers, and a second polarizing plate are superposed on a base having a curved surface in this order, and then the outer circumference of the second polarizing plate is pressed against the base while curving the second polarizing plate along the curved surface of the base. Then, in order to maintain such a curved state, the second polarizing plate is fixed to the base by a double-faced tape.

CN101398989 discloses a curved surface display panel and a manufacturing method thereof.

JP2008089884 discloses a display device with a curved section.

JP2003280548 discloses a flexible display device.

A liquid crystal panel of a general liquid crystal display (LCD) includes two substrates and a liquid crystal layer having dielectric anisotropy interposed between the two substrates. The liquid crystal panel applies an electric field to the liquid crystal layer and adjusts an intensity of the electric field to adjust transmittance of light passing through the liquid crystal layer, thereby obtaining a desired image. Such an LCD is a representative one of flat panel displays (FPDs) which are handy to carry. From among various LCDs, a TFT-LCD using thin film transistors (TFTs) as switching elements is mainly used.

From among the two substrates of the liquid crystal panel which are opposite each other, a plurality of display signal lines, i.e., gate lines and data lines, a plurality of thin film transistors and pixel electrodes are formed on the lower substrate, and color filters and a common electrode are formed on the upper substrate.

Such a liquid crystal panel is generally manufactured in a flat shape. Therefore, if a curved display is required, the general flat liquid crystal panel is not used.

In order to solve such a problem, a flexible liquid crystal panel which employs substrates formed of a flexible material rather than glass substrates used in a general liquid crystal panel so as to be curved if external force is applied to the flexible liquid crystal panel has been developed.

However, the above conventional flexible liquid crystal panel has a difficult manufacturing process and high manufacturing costs.

### [Disclosure]

### [Technical Problem]

Therefore, the present invention has been made in view of the above problems, and it is an object of the present invention to provide a display panel manufacturing method for simply manufacturing a curved display panel using a liquid crystal panel employing conventional glass substrates.

### [Technical Solution]

In accordance with an aspect of the present invention, the above and other objects can be accomplished by the provision of a display panel manufacturing method according to claim 1 and 3. A display panel in a desired curved shape is manufactured using a flat liquid crystal panel with a lower substrate and an upper substrate formed of glass and opposite each other and a liquid crystal layer formed between the lower substrate and the upper substrate, including removing parts of the outer surfaces of the lower substrate and the upper substrate to reduce the lower substrate and the upper substrate to a predetermined thickness, and bending the reduced lower and upper substrates in the desired curved shape and then forming a transparent polymer layer in the same shape as the desired curved shape on each of the outer surfaces of the lower and upper substrates or adhering a transparent substrate manufactured in advance in the same shape as the desired curved shape to each of the outer surfaces of the lower and upper substrates.

The predetermined thickness may be within the range of 50 to 150µm.

### [Advantageous Effects]

The present invention provides a display panel manufacturing method in which a display panel in a curved shape may be simply manufactured by removing parts of the outer surfaces of a lower substrate and an upper substrate of a general liquid crystal panel to reduce the thickness of each of the lower and upper substrates, bending the lower and upper substrates in the curved shape, and then forming a transparent polymer layer on each of the outer surfaces of the lower substrate and the upper substrate or adhering a transparent substrate to each of the outer surfaces of the lower substrate and the upper substrate under the condition that the lower and upper substrates are bent in the curved shape.

### [Description of Drawings]

FIG. 1 is a schematic perspective view of a liquid crystal panel to which a display panel manufacturing method in accordance with one embodiment of the present invention is applicable; and
FIG. 2 is a view illustrating the display panel manufacturing method in accordance with the embodiment of the present invention.

### [Best Mode]

Hereinafter, embodiments of the present invention will be described in more detail with reference to the accompanying drawings.

In the drawings, the thickness of each of several layers and regions is exaggerated for convenience of description and clarity. Wherever possible, the same reference numbers will be used throughout the drawings to refer to the same or like parts. It will be understood that when an element is referred to as being 'on' or "under" another element, it can be directly on/under the element, and one or more intervening elements may also be present. However, when an element is referred to as being directly 'on' or 'under' another element, one or more intervening elements are not present.

A display panel manufacturing method in accordance with one embodiment of the present invention is a method for manufacturing a display panel in a curved shape using a general liquid crystal panel.

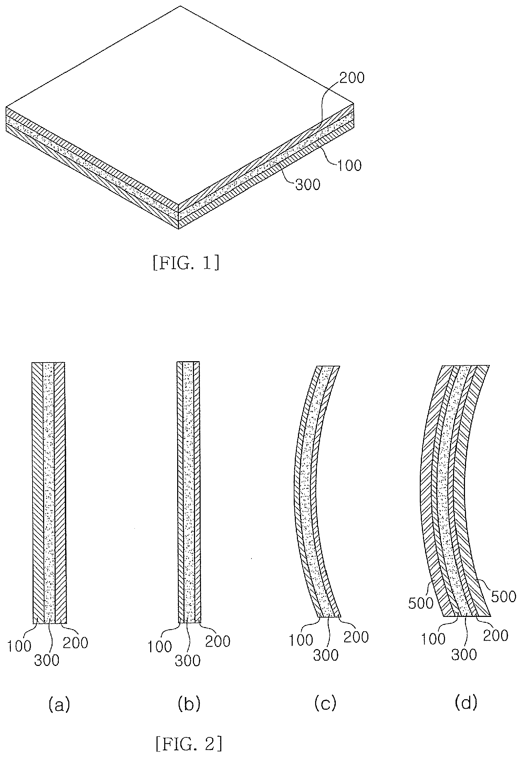

With reference to FIG. 1, the general liquid crystal panel includes a lower substrate 100 and an upper substrate 200 which are formed of glass and are opposite each other, and a liquid crystal layer 300 formed between the lower substrate 100 and the upper substrate 200 and including liquid crystal molecules oriented vertically or horizontally with respect to the two substrates 100 and 200. The lower substrate 100 is referred to as a thin film transistor array substrate, and the upper substrate 200 is referred to as a color filter array substrate.

A sealant (not shown) formed of a material to bond the two substrates 100 and 200, defining a part filled with liquid crystals, and preventing leakage of the liquid crystals may be formed at the edge of each of the two substrates 100 and 200, and polarizing plates to polarize light may be attached to the outer surfaces of the two substrates 100 and 200.

Hereinafter, the display panel manufacturing method for manufacturing a display panel in a curved shape in accordance with the embodiment of the present invention will be described with reference to FIG. 2.

FIG. 2(a) is a side view of a general liquid crystal panel, and, in accordance with the present invention, parts of the outer surfaces of the lower substrate 100 and the upper substrate 200 are removed to be reduced to a predetermined thickness, as shown in FIG. 2(b). Here, the predetermined thickness may have a value within the range of 50 to 150µm.

That is, the parts of the outer surfaces of the lower substrate 100 and the upper substrate 200 formed of glass are removed such that the thickness of each of the lower substrate 100 and the upper substrate 200 is reduced to the predetermined thickness. Here, the lower substrate 100 and the upper substrate 200 are removed through a conventionally known method, for example, a mechanical polishing method or an etching method using an etching solution.

The reason why the thickness of each of the lower substrate 100 and the upper substrate 200 after removal of the parts of the outer surfaces of the lower substrate 100 and the upper substrate 200 has a value within the range of 50 to 150µm is to bend the lower substrate 100 and upper substrate 200 without breakage. That is, if the thickness of each of the lower substrate 100 and the upper substrate 200 after removal of the parts of the outer surfaces of the lower substrate 100 and the upper substrate 200 is smaller than 50µm or greater than 150µm, the lower substrate 100 and the upper substrate 200 may be easily broken or are not bent during the bending process of the lower substrate 100 and the upper substrate 200.

After the lower substrate 100 and the upper substrate 200 are reduced to the predetermined thickness, the lower substrate 100 and the upper substrate 200 are bent in a desired curved shape, as shown in FIG. 2(c).

Further, a transparent polymer layer 500 in the same shape as the desired curved shape may be respectively formed on each of the outer surfaces of the lower substrate 100 and the upper substrate 200 under the condition that the lower substrate 100 and the upper substrate 200 are bent in the desired curved shape, as shown in FIG. 2(d). That is, the transparent polymer layer 500 may be formed by applying a liquid transparent polymer to the outer surfaces of the lower substrate 100 and the upper substrate 200 under the condition that the lower substrate 100 and the upper substrate 200 are bent in the desired curved shape and then hardening the liquid transparent polymer. The transparent polymer layer 500 may be formed by fixing the bent lower and upper substrates 100 and 200 within a mold, inserting the polymer into both sides of the mold, and then hardening the polymer. During a process of hardening the liquid transparent polymer, the polymer is adhered to the outer surfaces of the lower substrate 100 and the upper substrate 200. Therefore, when the liquid transparent polymer is hardened, the lower substrate 100, the upper substrate 200 and the transparent polymer layers 500 are maintained in the desired curved shape. Here, the transparent polymer may be a random transparent or semitransparent polymer, such as transparent UV resin.

Although the preferred embodiments of the present invention have been disclosed for illustrative purposes, those skilled in the art will appreciate that various modifications, additions and substitutions are possible, without departing from the scope of the invention as disclosed in the accompanying claims.

### [Industrial Applicability]

The present invention provides a display panel manufacturing method which is applicable to manufacturing of a display panel.

## Claims

1. A display panel manufacturing method in which a display panel in a desired curved shape is manufactured using a flat liquid crystal panel with a first substrate (100) and a second substrate (200) formed of glass and opposite each other and a liquid crystal layer (300) formed between the first substrate (100) and the second substrate (200), the method comprising in the following order, the steps of:
removing parts of outer surfaces of the first substrate (100) and the second substrate (200), respectively, so as to reduce each thickness of the first substrate (100) and the second substrate (200) to a predetermined value;
bending the reduced first and second substrates (100, 200) so as to maintain the substrates in the desired curved shape, and
forming a first polymer transparent layer and a second polymer transparent layer, both of which being in the substantially same shape as the desired curved shape and integrally attached to each of the outer surfaces of the first and second substrates, respectively, wherein the forming of each of the first and second transparent polymer layers comprises:
fixing the bent first (100) and second substrates (200) in a mold;
inserting a liquid transparent polymer into both sides of the mold; and
applying the liquid transparent polymer on each of the outer surfaces of the first and second substrates (100, 200) formed in the desired curved shape to form the first and second transparent polymer layers (500); and
hardening the liquid transparent polymer.

2. The display panel manufacturing method according to claim 1, wherein the predetermined thickness is within the range of 50 to 150*µ*m.

## Patentansprüche

1. Anzeigetafelherstellungsverfahren, bei welchem eine Anzeigetafel mit einer gewünschten gebogenen Form unter Verwendung einer flachen Flüssigkristalltafel hergestellt wird, welche ein erstes Substrat (100) und ein zweites Substrat (200), die aus Glas gebildet sind und einander gegenüber liegen, und eine zwischen dem ersten Substrat (100) und dem zweiten Substrat (200) gebildete Flüssigkristallschicht (300) aufweist, wobei das Verfahren in der folgenden Reihenfolge die folgenden Schritte aufweist:
Entfernen von Teilen von Außenflächen des ersten Substrats (100) beziehungsweise des zweiten Substrats (200), um die jeweilige Dicke des ersten Substrats (100) und des zweiten Substrats (200) auf einen vorbestimmten Wert zu verringern;
Biegen der reduzierten ersten und zweiten Substrate (100, 200), um die Substrate in der gewünschten gebogenen Form zu halten, und
Bilden einer ersten transparenten Polymerschicht und einer zweiten transparenten Polymerschicht, welche beide im Wesentlichen dieselbe Form wie die gewünschte gebogene Form aufweisen und einstückig an den jeweiligen Außenflächen des ersten beziehungsweise des zweiten Substrats angebracht sind, wobei das Bilden jeder der ersten und der zweiten transparenten Polymerschichten aufweist:
das Befestigen des gebogenen ersten (100) und zweiten Substrats (200) in einer Form;
das Einbringen eines flüssigen transparenten Polymers in beide Seiten der Form; und
Aufbringen des flüssigen transparenten Polymers auf jede der Außenflächen des mit der gewünschten gebogenen Form gebildeten ersten und zweiten Substrats (100, 200), um die erste und die zweite transparente Polymerschicht (500) zu bilden; und
das Härten des flüssigen transparenten Polymers.

2. Anzeigetafelherstellungsverfahren nach Anspruch 1, bei welchem die vorbestimmte Dicke im Bereich von 50 bis 150 µm liegt.

## Revendications

1. Procédé de fabrication de panneau d'affichage dans lequel un panneau d'affichage selon une forme incurvée souhaitée est fabriqué à l'aide d'un panneau plat à cristaux liquides avec un premier substrat (100) et un second substrat (200) composés de verre et opposés l'un à l'autre et une couche de cristaux liquides (300) formée entre le premier substrat (100) et le second substrat (200), le procédé comprenant dans l'ordre suivant, les étapes de :
élimination de parties de surfaces extérieures du premier substrat (100) et du second substrat (200), respectivement, de façon à réduire chaque épaisseur du premier substrat (100) et du second substrat (200) jusqu'à une valeur prédéterminée ;
cintrage des premier et second substrats (100, 200) réduits de façon à conserver les substrats selon la forme incurvée souhaitée, et
formation d'une première couche transparente en polymère et d'une seconde couche transparente en polymère, les deux étant sensiblement de la même forme que la forme incurvée souhaitée et fixées d'un seul tenant à chacune des surfaces extérieures des premier et second substrats, respectivement, dans lequel la formation de chacune des première et seconde couches transparentes en polymère comprend :
la fixation des premier (100) et second (200) substrats cintrés dans un moule ;
l'insertion d'un polymère transparent liquide dans les deux côtés du moule ; et
l'application du polymère transparent liquide sur chacune des surfaces extérieures des premier et second substrats (100, 200) formés selon la forme incurvée souhaitée pour former les première et seconde couches en polymère transparent (500) ; et
le durcissement du polymère transparent liquide.

2. Procédé de fabrication de panneau d'affichage selon la revendication 1, dans lequel l'épaisseur prédéterminée est dans la plage de 50 à 150 µm.
